# EUROPEAN PATENT SPECIFICATION

(11) **EP 3 416 352 B1**
(45) Date of publication and mention of the grant of the patent: **20.05.2020**
(21) Application number: 17176161.2
(22) Date of filing: 15.06.2017
(51) Int. Cl.: H04L 29/08, G06F 21/00, G06Q 20/32, G07B 15/06

(54) **ON-BOARD DEVICE FOR A VEHICLE**
BORDVORRICHTUNG FÜR EIN FAHRZEUG
DISPOSITIF EMBARQUÉ POUR UN VÉHICULE

(43) Date of publication of application: 19.12.2018
(73) Proprietor: AUTOSTRADE TECH S.p.A., 00159 Roma (IT)
(72) Inventor: GARGIANI, Leonardo, 00159 Roma (IT)
(74) Representative: Pietra, Giulia

(56) References cited:
- US-A1- 2004 236 917
- US-A1- 2014 316 685

## Description

### Technical field of the invention

The present invention relates in general to the field of telematic traffic services. In particular the present invention relates to an on-board device for a vehicle, suitable for use in a system which supports a telematic traffic service.

### Prior art

Systems which support telematic traffic services are known. These services comprise both services for the user (such as payment of tolls for access to road/motorway sections, payment of carpark stays, etc.) and administrator services (such as control of access to urban areas where traffic is restricted, monitoring of traffic along a road/motorway section, etc.).

These systems generally comprise an on-board device (also known as "OBU", i.e. "On Board Unit") suitable for installation in a vehicle, and a plurality of road-side devices (also known as "RSU", i.e. "Road Side Units") suitable for installation on the road side, on access gateways or transit points, or at toll stations.

Generally, both the on-board device and the road-side devices are provided with respective radiofrequency communication stages (typically, DSRC stages, i.e. "Dedicated Short Range Communication" stages) which allow the on-board device to exchange information with the road-side devices. These radiofrequency communication stages typically use radiofrequency carriers, for example within the frequency range 5-6 GHz.

Each on-board device typically has an associated unique identification code OBU-ID, with which it is configured via software during manufacture or before being commercially distributed. Moreover, when an on-board device is assigned to a user, it may be configured, or personalized, with information about the user (for example, personal data/contract details) and information about the vehicle (number plate, etc.). The configuration of an on-board device generally involves also the management of the various applications which provide the telematic traffic services supported by the device.

After an on-board device has been configured and installed on-board, it may be necessary to modify its configuration, for example in order to update or activate the software applications already resident, or load new applications, or remove or deactivate those applications which are no longer of interest for the user. This is for example the case where a user wishes to activate temporarily a toll payment service in a foreign country. In this case, the configuration of the user's on-board device must be modified by loading and activating temporarily a software application able to support this service.

Moreover, after an on-board device has been configured and installed on-board, it may be necessary to carry out checks on operation thereof and diagnostic tests, such as a check of the charged level of its battery. It might also be necessary to check the configuration information (relating to the user and/or to the motor vehicle) stored in the on-board device.

All the aforementioned operations require access to the on-board device in order to perform writing or reading of its memory and are generally carried out by means of equipment provided with radiofrequency communication stages able to communicate with that present in the on-board device. This equipment is generally present at the operating centres managed by the company which provides the telematic traffic service or by the company which manages the road or the motorway along which the telematic traffic service is provided. If a user therefore wishes to modify the configuration of his/her on-board device or check operation thereof, generally he/she must visit one of these operating centres.

US 2014/0316685 describes an on-board device for a system supporting telematic traffic services, which comprises a short-range communication module for communication with a first external device (for example, the mobile phone of the user), a long-range communication module (for example, DSRC) for communication with a second external device (for example, the road-side devices of the system) and a non-volatile memory which is accessible by both the communication modules. The short-range communication module may be for example a passive NFC tag. This is powered by the user's mobile phone during communication and in this way may access the non-volatile memory, powering it, even when the rest of the on-board device is not in an operative condition. The contents of the non-volatile memory may therefore be read and/or written by means of the connection between the user's mobile phone and the short-range communication module, irrespective as to whether the rest of the on-board device is operative or not. It is thus possible to modify the configuration of the on-board device, for example writing configuration data in the non-volatile memory, via the user's mobile phone. Similarly it is possible to read the contents of the non-volatile memory via the user's mobile phone.

### Summary of the invention

The Applicant has noticed that the on-board device described by US 2014/0316685 has a number of drawbacks.

The Applicant has in fact noticed that the short-range communication module included in this device, since it has direct access to the non-volatile memory of the device both during reading and during writing, disadvantageously reduces the security of the on-board device. The short-range and near-field technologies (such as NFC technology) generally have mechanisms for authentication and protection of the connection which are not particularly secure, the security of the connection being mainly based on the fact of having a coverage range of only a few centimetres. If, therefore, for example, a third party should come into possession of the on-board device of a user, he/she could access the on-board device using his/her own mobile phone (or another device equipped with NFC reader), and thus modify its configuration, or access the source code, or read information stored therein and use it to clone the on-board device (i.e. copy it onto another on-board device).

In view of the above, an object of the present invention is to provide an on-board device for a motor vehicle which is suitable for use in a system which supports a telematic traffic service and which solves the aforementioned problems.

In particular, an object of the present invention is to provide an on-board device for a motor vehicle, suitable for use in a system supporting a telematic traffic service, which is more secure.

According to embodiments of the present invention, this object is achieved by an on-board device which comprises a radiofrequency communication stage for communication with the road-side devices, a short-distance communication stage for communication with an electronic device (for example a mobile phone of the user or a reader) and a data processing unit cooperating with the radiofrequency communication stage. The on-board device also comprises a non-volatile central operating memory and a volatile memory. The non-volatile central operating memory is accessible only by the data processing unit, while the volatile memory is accessible both by the short-range communication stage and by the data processing unit. The volatile memory temporarily stores the data which the electronic device wishes to read from and/or write into the non-volatile central operating memory via the short-range communication stage and the data processing unit.

The access to the non-volatile central operating memory by the short-range communication stage (and therefore by the electronic device) therefore is not direct, but advantageously occurs via the volatile memory and the data processing unit.

For example, in a first reading mode, the processing unit retrieves the data to be read from the non-volatile central operating memory and writes it into the volatile memory, where it is temporarily stored. Then the short-range communication stage transfers this data from the volatile memory to the electronic device.

In this second writing mode, on the other hand, the short-range communication stage receives the data to be written into the non-volatile central operating memory and writes it into the volatile memory, where it is temporarily stored. Then the processing unit transfers this data from the volatile memory to the non-volatile central operating memory.

The on-board device is advantageously secure since, for example in writing mode, at the time of reception, at the on-board device, of the data to be written, the data temporarily resides in a volatile memory separate from the central operating memory of the unit. This allows particularly effective security mechanisms to be implemented. For example, the data may be received in encrypted form and the key for decrypting it may be stored in the non-volatile central operating memory. In this way, the data to be decrypted and the key for decrypting it reside in two physically separate memories, one of which (namely that which stores the key) is accessible only to the data processing unit and not by the short-range communication stage. Despite the fact, therefore, that the short-range communication stage allows an unprotected connection to be established between electronic device and on-board device, the on-board device is advantageously more secure.

In addition to the key for implementing the encryption mechanisms, the central operating memory advantageously may store all the information which is more sensitive from the point of view of the security of the on-board device and which it is desired to protect from unauthorized access via the short-range communication stage. For example, the source code of the on-board device (which is also responsible for managing the user data and the configuration data) may be saved in the central operating memory, such that it is protected from unauthorized access via the short-range communication stage and from the risks which such access could involve.

According to a first aspect of the present invention, an on-board device for a vehicle is provided, the on-board device being suitable for use in a system which provides a telematic traffic service, the on-board device comprising:
- a radiofrequency communication stage configured to communicate with a road-side device of said system;
- a short-range communication stage configured to communicate with an electronic device located in the vicinity thereof;
- a data processing unit cooperating with the radiofrequency communication stage and with the short-range communication stage,
- a non-volatile central operating memory accessible by the data processing unit and not accessible by the short-range communication stage; and
- a volatile memory accessible the short-range communication stage and by the data processing unit,
wherein the volatile memory is suitable for temporarily storing data to be read and/or data to be written into the non-volatile central operating memory by the external device via the short-range communication stage and the data processing unit.

Preferably the on-board device also comprises a battery electrically connected directly or indirectly to the radiofrequency communication stage, to the short-range communication stage, to the non-volatile central operating memory and to the volatile memory.

Preferably, the battery is electrically connected to the non-volatile central operating memory by means of a first switch, the first switch being open when the data processing unit is in stand-by mode and the first switch being closed when the data processing unit is in operative mode.

Preferably, the first switch is provided inside the data processing unit and is configured to close automatically when said data processing unit (120) passes from the stand-by mode into said operative mode.

According to first variants, the battery is directly connected electrically to the short-range communication stage.

In these variants, the volatile memory is preferably a RAM memory or a buffer memory.

According to other variants, the battery is electrically connected to the short-range communication stage by means of a second switch, the second switch being open when the data processing unit is in stand-by mode and the second switch being closed when the data processing unit is in operative mode.

Preferably, also the second switch is provided inside the data processing unit.

Preferably, the data processing unit is electrically connected to the short-range communication stage also by means of an electrical connection, and:
- the short-range communication stage is configured to generate and send to the data processing unit via the electrical connection a wake-up signal; and
- the data processing unit is configured, upon reception of the wake-up signal, to pass from a stand-by mode to an operative mode, closing the first switch.

Preferably, the on-board device also comprises a pushbutton accessible on the outside of the on-board device and electrically connected to the data processing unit by means of a further electrical connection, and:
- the pushbutton is configured, when pressed, to generate and send to the data processing unit via the further electrical connection a further wake-up signal; and
- the data processing unit is configured, upon reception of the further wake-up signal, to pass from a stand-by mode to an operative mode, closing the first switch.

Preferably, the data processing unit is configured to:
- upon reception of the wake-up signal from the short-range communication stage, enable only operations for reading of data by the non-volatile central operating memory; and
- upon reception of the further wake-up signal from the pushbutton, enable only the operations of writing data into the non-volatile central operating memory.

Preferably:
- the short-range communication stage is configured, upon reception of a read command by the electronic device, to forward the read command to the data processing unit;
- the data processing unit is configured, upon reception of the read command, to retrieve the data to be read from the central operating memory and store it temporarily in the volatile memory; and
- the short-range communication stage is configured to read the data to be read temporarily stored in the volatile memory and to transmit it to the electronic device.

Preferably:
- the short-range communication stage is configured, upon reception of a write command and the data to be written by the electronic device, to forward the write command to the data processing unit and store temporarily in the volatile memory the data to be written; and
- the data processing unit is configured, upon reception of the write command, to read the data to be written temporarily stored in the volatile memory and transfers it into the non-volatile central operating memory.

Preferably, the data to be written is received by the short-range communication stage, encrypted with a symmetric key, and the data processing unit is configured to decrypt the data to be written before transferring it from the volatile memory to the non-volatile central operating memory, using a key the same as the symmetric key and stored in the central operating memory.

Preferably, the volatile memory comprises:
- at least one first memory area in which the short-range communication stage is enable to write only the data to be written in the non-volatile central operating memory and from which the data processing unit is enabled to only read the data to be written in the non-volatile central operating memory; and/or
- at least one second memory area in which said data processing unit is enabled to only write the data to be read by the non-volatile central operating memory and from which the short-range communication stage is enabled to only read the data to be read by the non-volatile central operating memory.

According to a further embodiment, the on-board device also comprises a further non-volatile memory configured to store a set of basic data relating to the on-board device, the further non-volatile memory being accessible by the short-range communication stage, the short-range communication stage being configured to read the basic data from the further non-volatile memory and send it to the electronic device.

According to a further embodiment, the on-board device also comprises a further short-range communication stage and a further non-volatile memory able to store a set of basic data relating to the on-board device, the further non-volatile memory being accessible by the short-range communication stage, the short-range communication stage being configured to read the basic data from the further non-volatile memory and send it to the electronic device.

According to a second aspect of the present invention, a system for providing a telematic traffic service is provided, the system comprising a plurality of road-side devices, an electronic device and an on-board device for a vehicle, said on-board device being configured to communicate both with the plurality of road-side devices and with the electronic device, the on-board device being as described above.

### Brief description of the drawings

The present invention will become clearer from the following description, provided by way of a non-limiting example, to be read with reference to the accompanying drawings, in which:
- Figure 1 shows in schematic form a system for providing a telematic traffic service, comprising an on-board device according to an first embodiment of the present invention;
- Figures 2a to 2d show in greater detail the structure of the on-board device according to four different variants of the first embodiment of the present invention;
- Figures 3 and 4 are two flow diagrams which illustrate operation of the on-board device according to the variants of Figures 2a to 2d, during a data reading operation and a data writing operation, respectively;
- Figure 5 shows the structure of the on-board device according to a second embodiment of the present invention; and
- Figure 6 shows the structure of an on-board device according to a third embodiment of the present invention.

### Detailed description of preferred embodiments of the invention

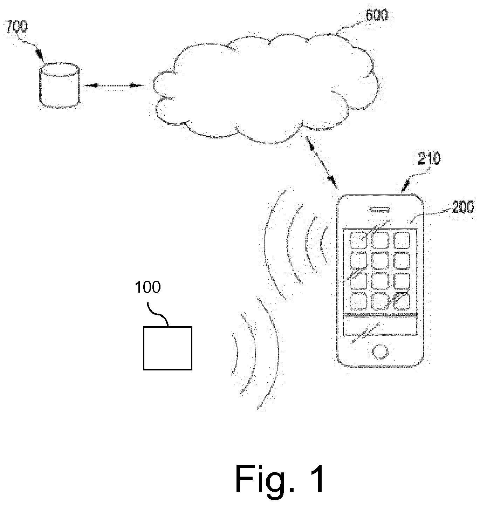

Figure 1 shows in schematic form a system for providing a telematic traffic service, comprising an on-board device according to embodiments of the present invention. The telematic traffic service may be a service for the users (such as payment of tolls for access to road/motorway sections, payment of carpark fees, etc.) or an administrator service (such as control of access to restricted-traffic urban areas, monitoring of traffic along a road/motorway section, etc.).

The system comprises an on-board device 100, an electronic device 210, a plurality of road-side devices (for the sake of simplicity not shown in Figure 1), a communications network 600 and central server 700 which communicates with the electronic device 210 via the communications network 600.

The on-board device 100 is preferably suitable for installation on-board a vehicle (for the sake of simplicity not shown in Figure 1), for example a motor vehicle. The road-side devices are instead configured to be installed in a fixed position, for example along a road side, on an overpass or on an access gateway (for example to a car park, an urban area, a road or motorway section, etc.).

As will be described in greater detail below, the on-board device 100 is configured to communicate via radio both with the road-side devices and with the electronic device 210.

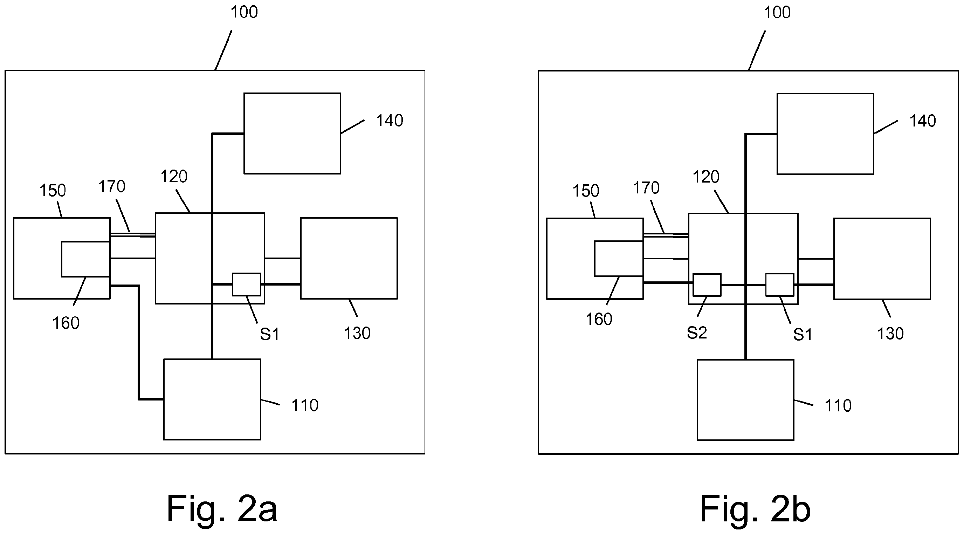

In particular, as shown in Figures 2a-2d, the on-board device 100 preferably comprises a battery 110, a data processing unit 120, a non-volatile memory 130, a radiofrequency communication stage 140, a short-range communication stage 150 and a volatile memory 160. The on-board device 100 may comprise other components (for example GNSS components for satellite positioning) which will not be described in greater detail hereinbelow since they are not useful for the purposes of the present description.

The battery 110 is preferably electrically connected directly or indirectly to each of the other components of the on-board device 110, so as to power them if and when necessary.

More particularly, the battery 110 is preferably electrically connected to the data processing unit 120 which is in turn electrically connected to the non-volatile memory 130, to the radiofrequency communication stage 140 and to the short-range communication stage 150.

Preferably, the electrical connection between the battery 110 and the non-volatile memory 130 may pass via the data processing unit 120. It may comprise a first switch S1 and, preferably, also a voltage regulator (not shown in Figures 2a-2d). The switch S1 may be provided inside the data processing unit 120 (as schematically shown in Figures 2a-2d) or outside thereof. The switch S1 is preferably also present in the case where the memory 130 is integrated in the data processing unit 120. The switch S1 is preferably controlled at a hardware level depending on the mode assumed by the data processing unit 120, as will be described in greater detail herein below.

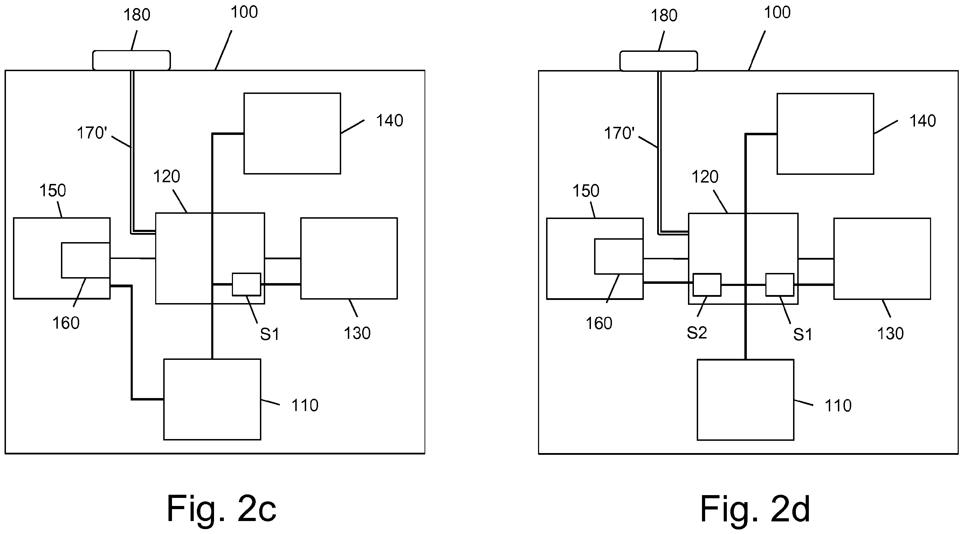

According to the variants shown in Figures 2a and 2c, the battery 110 is directly connected electrically to the short-range communication stag 150 (namely there is no switch) such that the short-range communication stage 150 is constantly powered (until the battery 110 is charged). In this case, the electrical connection between battery 110 and short-range communication stage 150 may pass through the data processing unit 120, or instead bypass the data processing unit 120, as shown in Figures 2a and 2c.

According to other variants shown in Figures 2b and 2c, the electrical connection between the battery 110 and the short-range communication stage 150 comprises a switch S2. The switch S2 may also be provided inside the data processing unit 120 (as schematically shown in Figures 2b and 2d) or outside thereof. The switch S2 is also preferably controlled at a hardware level depending on the mode assumed by the data processing unit 120, as will be described in greater detail herein below.

According to the variants shown in Figures 2a and 2b, the data processing unit 120 is electrically connected to the short-range communication stage 150 also by means of a further electrical connection 170 via which the data processing unit 120 receives wake-up electric signals, as will be described in greater detail below.

According to the variants shown in Figures 2c and 2d, the data processing unit 120 is instead electrically connected to a pushbutton 180 accessible from outside the on-board device 100 by means of a further electrical connection 170' via which the data processing unit 120 receives wake-up electric signals, as will be described in greater detail herein below.

According to other variants not shown in the drawings, the on-board device 100 may comprise both the connection 170 and the pushbutton 180 and the connection 170', so that the data processing unit 120 may receive wake-up electric signals both from the short-range communication stage 150 and from the pushbutton 180, as will be described in greater detail herein below.

The non-volatile memory 130 may be provided outside or inside the data processing unit 120. In any case, the non-volatile memory 130 is accessible by the data processing unit 120 alone. In particular it is not accessible by the short-range communication stage 150.

In the event of it being provided externally, the non-volatile memory 130 preferably stores a hardware identifier UID₁₂₀ of the data processing unit 120 (preferably, its silicon number) in a manner non-alterable and non-erasable (other than by using special software). This hardware identifier UID₁₂₀ is used by the data processing unit 120 to check the authenticity of the data read from the non-volatile memory 130. This advantageously makes it possible to prevent the contents of the central operating memory of an on-board device from being cloned and transferred onto another on-board device.

By way of a further security measure, if the non-volatile memory 130 is provided outside the data processing unit 120, an interface (not shown in the drawings) is provided between the unit 120 and the non-volatile memory 130, said interface being configured to perform encryption (preferably hardware encryption) of the data which the unit 120 reads from the memory 130. The data stored in the non-volatile memory 130 is thus advantageously protected, preferably at the hardware level. The non-volatile memory 130 therefore acts as a secure central operating memory of the on-board device 100.

These mechanisms further increase the security of the unit 100 in the case where the non-volatile memory 130 is provided outside the data processing unit 120. If, in fact, the non-volatile memory 130 is removed from the device 100 and mounted on another device, the data processing unit of the latter will not manage to read the data from the non-volatile memory 130.

Preferably, the non-volatile memory 130 stores the unique identification code OBU-ID of the on-board device 100 and, optionally, information about the user who is owner of the vehicle and about the vehicle itself (for example number plate and/or toll class of vehicle). The non-volatile memory 130 also preferably stores the software applications which provide the telematic traffic services for the user and/or the administrator supported by the on-board device 100 and the data generated by communication of the on-board device 100 with the road-side devices of the system via the radiofrequency communication stage 140 (for example, data relating to the position of the vehicle or its passage through motorway transit points).

The radiofrequency communication stage 140 is preferably configured to establish radio links with the road-side devices. For example, the radiofrequency stage 140 may be implemented using DSRC (Dedicated Short Range Communications) technology which, as is known, comprises radio channels and authentication, encoding and decoding procedures which have been specifically developed for telematic traffic services and uses frequency bands in the range of 5.7 - 5.9 GHz, for example in accordance with the provisions of the standards ETSI 200 674 and CEN TC 278.

The short-range communication stage 150 is preferably configured to support short-range radio links (maximum 10 cm) with the electronic device 210.

The electronic device 210 may belong to the same user who has been assigned the on-board device 100 or may belong to third parties (for example, the administrator of the road or motorway infrastructure along which the telematic traffic service supported by the on-board device 100 is provided, the telematic traffic service provider, or the body or authority responsible for monitoring traffic offences). The electronic device 210 is also preferably provided with cabled or wireless connectivity (for example WiFi or cellular network) to the communications network 600. For example, the electronic device 210 may be a smartphone, a tablet or a generic commercial or specially designed reader. Preferably, the electronic device 210 is also provided with a user interface 200 comprising input and/or output elements comprising for example pushbuttons, cursors, touchscreen features, etc. The electronic device 210 also comprises a short-range communication stage compatible with the short-range communication stage 150 of the on-board device 100.

Preferably, the short-range communication stage 150 (and therefore also the corresponding short-range communication stage of the electronic device 210) is realized using near-field technology, such as RFID (Radio-Frequency IDentification) technology with short range (i.e. radius less than 10 cm). Of the various RFID technologies it is possible to use, for example, NFC (Near Field Communication) technology which, as is known, operates at the frequency of 13.56 MHz and may reach a maximum transmission speed of 424 kbit/s.

Preferably, the short-range communication stage included in the electronic device 210 is configured as initiator, while the short-range communication stage 150 is configured as target. In other words, the short-range communication stage 150 is configured to receive from the short-range communication stage included in the electronic device 210 a radio carrier, from which it extracts its own power supply.

The configuration of the short-range communication stage 150 as target is advantageous, since it allows the electronic and software complexity of the on-board unit to be reduced.

The volatile memory 160 may be electrically connected to the short-range communication stage 150. Alternatively, the volatile memory 160 may be integrated in the short-range communication stage 150, as schematically shown in Figures 2a-2d. In both cases the volatile memory 160 is accessible by the short-range communication stage 150 which may carry out on it both write operations and read operations without involving the data processing unit 120, as will be described in greater detail herein below. The memory 160 is volatile (or temporary), namely it is unable to retain the data when it is not electrically powered. For example, the memory 160 may be a RAM memory or buffer memory. The volatile memory 160 is preferably able to store in a temporary or transitory manner data exchanged between the electronic device 210 and the on-board device 100, as will be described in greater detail herein below.

In order to establish a radio link between the on-board device 100 and the electronic device 210, the two devices are moved close to each other (at a distance of less than 10 cm). The communications protocol via which the short-range communication stage 150 and the corresponding short-range stage included in the electronic device 210 operate thus establishes automatically a radio link. The radio link thus established is preferably a two-way point-to-point link which allows a two-way exchange of data between on-board device 100 and electronic device 210.

It should be noted that the establishment of the short-range radio link does not require any manual setting or any pairing procedure and is therefore very quick (about 1/10th of a second). Moreover, since the short-range link has a radius of 10 cm maximum, it is intrinsically secure against sniffing activities.

By means of the short-range radio link between electronic device 210 and on-board device 100, the short-range communication stage 150 may transmit to the electronic device 210 data read by the components of the on-board device 100 (in particular, by the non-volatile central operating memory 130), thus allowing the reading of this data by the electronic device 210. These read operations may allow the user of the electronic device 210 (who may be the user who has been assigned the on-board device 100 or the personnel of the provider of the telematic traffic service supported by the on-board device 100) to carry out for example diagnostic checks or tests regarding operation of the on-board device 100 (for example, checking of the charged level of its battery 110) or checking of the data stored in the non-volatile memory 130.

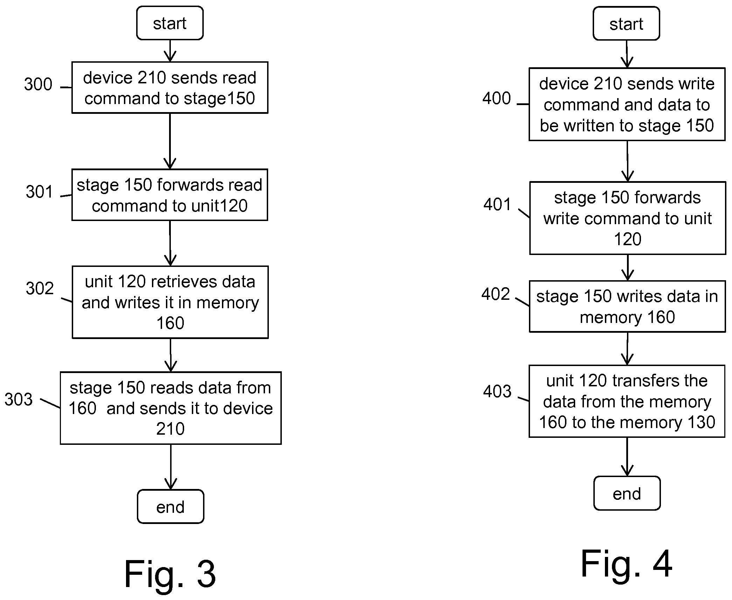

With reference to the flow diagram of Figure 3 a read operation according to an embodiment of the present invention will now be described.

In order to start a read operation, the electronic device 210 preferably establishes a short-range connection with the short-range communication stage 150 and uses it to send a read command to the short-range communication stage 150 (step 300).

The short-range communication stage 150 forwards the read command to the data processing unit 120 (step 301).

The data processing unit 120 then preferably retrieves the data requested (for example from the non-volatile memory 130) and stores it temporarily in the volatile memory 160 (step 302). In order to avoid any overwriting or unauthorized access to the volatile memory 160, preferably one or more protected areas, or one or more areas with write functionality enabled solely by the data processing unit 120, and not by the short-range communication stage 150, are provided in the volatile memory 160. Optionally step 302 also involves encryption of the recovered data, as will be described in greater detail below.

The short-range communication stage 150 reads finally the data from the volatile memory 160 and forwards it to the electronic device 210 (step 303). Optionally, the data read may be displayed in the form of texts or graphics on the user interface 200 of the electronic device 210. In addition or alternatively, the data read may be transmitted from the electronic device 210 to the central server 700 via the communications network 600.

In addition to the read operations, by means of the short-range radio link between electronic device 210 and on-board device 100, the short-range communication stage 150 may receive from the electronic device 210 data to be supplied to the other components of the on-board device 100 (in particular to the data processing unit 120 and/or to the non-volatile memory 130), thus allowing writing of this data onto the on-board device 100 via the electronic device 210. These write operations may for example allow the user of the electronic device 210 (who may be the user who has been assigned the on-board device 100 or the personnel of the provider of the telematic traffic service supported by the on-board device 100) to modify the configuration of the on-board device 100, for example updating or activating the software applications which are already present or loading new applications or removing or deactivating those applications which are no longer of interest for the user. These write operations may therefore be advantageously performed without having to visit a customer service operating centre.

With reference to the flow diagram of Figure 4 a write operation according to an embodiment of the present invention will now be described.

In order to start a write operation, the electronic device 210 preferably establishes a short-range connection with the short-range communication stage 150 and uses it to send a write command to the short-range communication stage 150 (step 400). The write command comprises (or is followed by) the data to be written, preferably in encrypted form. Preferably the electronic device 210 receives data to be written, in encrypted form from the central server 700 via the communications network 600. The electronic device 210 preferably does not perform any processing of the data to be written, merely performing a function a transducer between the connection to the communications network 600 (for example Wi-Fi or cellular network) and the short-range radio connection (for example NFC).

Once the write command and the data to be written have been received via the short-range radio connection, the short-range communication stage 150 preferably forwards the write command to the data processing unit (step 401) and saves in the volatile memory 160 where it is temporarily stored (step 402). The steps 401 and 402 may be performed in the order shown, or in the reverse order (first the step 402 and then the step 401). In order to avoid overwriting or unauthorized access to the volatile memory 160, preferably a write protection mechanism in the form of a passcode is provided. Alternatively, it is possible to provide in the volatile memory 160 one or more protected areas or have a write function enabled only by the short-range communication stage 150, and not by the data processing unit 120.

The data processing unit 120, upon reception of the write command, reads the data temporarily stored by the volatile memory 160, processes it (in particular decrypts it, as will be described in greater detail hereinbelow) and transfer the data into the non-volatile memory 130 (step 403).

According to an advantageous variant, the on-board device 100 may be provided with one or more indicators (for example LED light indicators) able to provide the user with visual feedback as regards the outcome of the data write operation on the on-board device 100. For example, the on-board device 100 may be provided with a light indicator suitable for signalling to the user whether the operation of writing the data in the non-volatile memory 130 has been successfully completed.

From an electrical point of view, the behaviour of the on-board device 100 may have different variants.

In the case where the device 100 corresponds to the variant shown in Figure 2a (no switch 2a and electrical connection 170 between data processing unit 120 and short-range communication stage 150), upon reception of a read command or a write command from the electronic device 210, the short-range communication stage 150 preferably generates and sends automatically to the data processing unit 120 (which is in stand-by mode) an electric wake-up signal along the electrical connection 170. In response to this wake-up signal, the data processing unit 120 enters into an operative mode, closing the switch S1 and thus preparing to interact with the short-range communication stage 150 (including the volatile memory 160) and with the non-volatile memory 130. In the case of read operations, the data processing unit 120 may thus receive the read command from the short-range communication stage 150 (step 301) and read the data requested from the non-volatile memory 130 (step 302). In the case of write operations, the data processing unit 120 may initiate instead the processing and transfer of the data to be written from the volatile memory 160 to the non-volatile memory 130 (step 403). At the end of the read or write operation, the data processing unit 120 preferably returns into stand-by mode, preferably opening again the switch S1, so as to avoid any current drainage in stand-by mode.

In the case where the device 100 corresponds to the variant shown in Figure 2c (no switch S2 and electrical connection 170' between data processing unit 120 and pushbutton 180), the electric wake-up signal is sent via the electrical connection 170' to the data processing unit 120 from the pushbutton 180 which the user may press for example before the start of the read or write operation. This variant may be used, for example, in the case where the short-range communication stage 150 does not have the components necessary for the generation and sending of the electric wake-up signal or in the case where it is wished to avoid accidental or not authorized wake-ups which are of the data processing unit 120 (triggered for example by the involuntary or non-authorized movement close together of an electronic device 210, for example located outside the vehicle, and the on-board device 100 located inside the vehicle). As in the preceding variant, the data processing unit 120 is in stand-by mode (switch S1 open) and, in response to the wake-up signal, enters into an operative mode, closing the switch S1. Upon reception of a read command or a write command from the electronic device 210, the data processing unit 120 is therefore already ready to interact with the short-range communication stage 150 (including the volatile memory 160) and with the non-volatile memory 130, as described above. Likewise in this second variant, at the end of the write or read operation, the data processing unit 120 preferably returns into stand-by mode, opening again the switch S1.

In the case where the on-board device 100 has both the electrical connection 170 and the pushbutton 180 and the electrical connection 170', both the abovementioned mechanisms for wake-up of the data processing unit 120 may be used. The use of either one or the other may depend for example on the type of operation to be performed. For example, wake-up by the short-range communication stage 150 may be performed for read operations, while wake-up by the pushbutton 180 may be performed for write operations. In this case, the data processing unit 120 is preferably configured to enable only read operations or only write operations, depending on whether the wake-signal comes from the short-range communication stage 150 or from the pushbutton 180.

The variants described above and shown in Figures 2a and 2c (no switch S2) are preferred in the case where the volatile memory 160 is a RAM. In this case, in fact, owing to the continuous powering of the volatile memory 160 by the battery 110, the data may be kept stored in it so long as the battery 110 is charged. This data is therefore available for reading by the device 210, at least for as long as the battery 110 is charged.

If, instead, the switch S2 is also present (variants shown in Figures 2b and 2d), the short-range communication stage 150 (and therefore the volatile memory 160) is not constantly powered by the battery 110. Before sending the read or write command (and transferring the data) to the short-range communication stage 150, it is thus necessary to ensure that the processing unit 120 the switch S2.

For this purpose, according to the variant shown in Figure 2b, the electronic device 210 preferably sends a wake-up command to the short-range communication stage 150, before sending it a read or write command. In response, the short-range communication stage 150 preferably generates and sends automatically to the data processing unit 120 an electric wake-up signal via the electrical connection 170. The data processing unit 120 is in stand-by mode, with the switches S1 and S2 open. In response to this wake-up signal, the data processing unit 120 enters into operative mode, closing the switch S1 (so as to allow read and write access to the non-volatile memory 130) and also the switch S2. This latter operation also causes the short-range communication stage 150 and the volatile memory 160 to start being powered by the battery 110. The short-range communication stage 150 may thus receive and carry out a read command and/or a write command (and therefore transfer also the data) interacting with the data processing unit 120 as described above. At the end of the write or read operation, the data processing unit 120 preferably returns into stand-by mode, opening again the switches S1 and S2.

In the case where the device 100 corresponds to the variant shown in Figure 2d (switch S2 and electrical connection 170' between data processing unit 120 and pushbutton 180), the wake-up signal is sent directly via the electrical connection 170' to the data processing unit 120 by the pushbutton 180 which the user presses before the start of the read or write operation. As mentioned above, this variant may be used, for example, in the case where the short-range communication stage 150 does not have the components necessary for the generation and sending of the electric wake-up signal or in the case where the stage 150 is unable to generate the electric wake-up signal without being externally powered or in the case where it is wished to avoid accidental wake-up of the data processing unit 120 activated for example by the involuntary or non-authorized movement close together of electronic device 210 and on-board device 100. As in the preceding embodiment, in response to the wake-up signal, the data processing unit 120 enters into operative mode, closing the switch S1 (so as to allow read and write access to the non-volatile memory 130) and also the switch S2. This latter operation also causes the short-range communication stage 150 and the volatile memory 160 to start being powered by the battery 110. The short-range communication stage 150 may thus receive and carry out a read command and/or a write command interacting with the data processing unit 120 (which is already operative) as described above. At the end of the write or read operation, the data processing unit 120 preferably returns into stand-by mode, opening again the switches S1 and S2.

Also in the case where the switch S2 is present, the on-board device 100 may comprise both the electrical connection 170 and the pushbutton 180 and the electrical connection 170', such that both the wake-up mechanisms of the data processing unit 120 described above may be used (for example, as described above, wake-up by the short-range communication stage 150 for read operations and wake-up by the pushbutton 180 for write operations).

According to other variants, the data processing unit 120 is permanently in operative mode. In this case, the read and/or write commands received by the short-range communication stage 150 may be directly carried out, without the need for any wake-up signal.

To summarise, the on-board device 100 according to the present invention therefore is substantially able to operate in two different operating configurations:
- first operating configuration: reading of data via short-range radio connection with the electronic device 210. This operating configuration is generally useful for checking operation of the on-board device 100 for diagnostic purposes and, generally, for reading the data contained in the non-volatile memory 130; and
- second operating configuration: writing of data via short-range radio link with the electronic device 210. This operating configuration is generally useful for configuration of the on-board device 100 (for example in order to update or activate the software applications already present, or load new applications, or remove or deactivate those applications which are no longer of interest for the user, see the aforementioned case where the user wishes to activate temporarily a toll payment service in a foreign country).

Preferably a mechanism for protection of the data transmitted between electronic device 210 (or central server 700) and on-board device 100 is provided. It is preferably based on symmetric encryption of the transmitted data. This symmetric encryption uses a same private key to encrypt and decrypt the data, which key must therefore be known both to the central server 700 and to the on-board device 100. In particular, the private key is stored in the non-volatile memory 130 of the on-board device 100, preferably in an area which is non-erasable and non-modifiable (except by special software) of the non-volatile memory 130.

With reference, for example, to an operation for writing data in the non-volatile memory 130, the central server 700 preferably encrypts the data to be written with the private key and transmits it to the electronic device 210, which forwards it to the short-range communication stage 150 which, as described above, temporarily stores it the volatile memory 160. The data processing unit 120 (upon reception of the wake-up signal, as described above) decrypts the data to be written using the private key stored in the non-volatile memory 130 and transfers it into the non-volatile memory 130. This operation may be performed in different ways.

According to a first variant, the data processing unit 120 first transfers the encrypted data from the volatile memory 160 the non-volatile memory 130 and then decrypts it, using the symmetric key stored in the non-volatile memory 130.

According to a second variant, the data processing unit 120 first retrieves the symmetric key from the non-volatile memory 130, then uses it to decrypt the data (for example saved temporarily in an associated internal RAM memory), and finally transfers it into the non-volatile memory 130.

It should be noted that, in both the variants, in any case the data to be decrypted and the private key which is used to decrypt it reside in two physically separate memories, one of which (namely the non-volatile memory 130 which stores the private key) is accessible only by the data processing unit 120 and therefore is not accessible by the short-range communication stage 150. Despite the fact, therefore, that the short-range communication stage 150 allows an unprotected connection to be established between electronic device 210 and on-board device 100, the on-board device 100 is advantageously very secure.

The security of the private key used for symmetric encryption is preferably ensured in the manner described below.

Preferably, personalisation of the on-board device 100 is performed at the factory, this operation comprising the following steps:
(i) reading, via the radiofrequency communication stage 140, a unique identifier of the on-board device 100, for example its unique identification code OBU-ID;
(ii) transmitting the code OBU-ID to the input of a secure server (for example of the HSM - Hardware Security Module - type). The secure server stores (in a manner not accessible from outside) at least one master key, on the basis of which it then calculates at least one derived key using the OBU-ID code received as diversifier. The secure server therefore provides at its output the least one derived key calculated. Preferably, the secure server stores a master administration key *MAdBTKey* and a master application key *MApBTKey* on the basis of which it calculates, respectively, a derived administration key *DAdBTKey* and a derived application key *DApBTKey,* using the OBU-ID code received as diversifier. The two derived keys, output by the secure server, may be used for different applications.
(iii) storing the at least one derived key in the on-board device 100. As already mentioned, this operation is preferably performed at the factory, the at least one derived key being sent to the on-board device 100 via the radiofrequency communication stage 140. The derived key(s) is/are then stored in the non-volatile memory 130 so that it/they is/are protected (non-readable), non-modifiable and non-erasable without the action of the data processing unit 120.

During operation of the on-board device 100, as regards transmission of the data to be written from the central server 700 to the on-board device 100, the central server 700 preferably uses a second secure HSM server (also containing the master key(s)), supplying it with the unique identification code OBU-ID of the on-board device 100 and obtaining from it the specific derived key to be used for communication with the on-board device 100. The transmitted data, encrypted by the central server 700 with derived key, is received as described above by the data processing unit 120 which, using the appropriate derived key stored in the non-volatile memory 130, decrypts the data received which is finally stored in the non-volatile memory 130.

Optionally, a session key may also be used for communication between the central server 700 and the on-board device 100. Preferably, the sender (namely the central server 700 if data is written in the on-board device 100, or the on-board device 100 if data is read from the on-board device 100) calculates a session key, for example on the basis of the derived key and a random number. The session key is recalculated (and is therefore different) for each communication session.

The sender preferably uses the calculated session key to encrypt further the data to be transmitted, already encrypted with the derived key of the symmetric encryption mechanism. The sender also preferably encrypts the calculated session key, using for example the public key of the recipient (namely the on-board device 100 if data is written, or the central server 700 if data is read) and also sends this to the recipient.

The recipient, upon reception of the data and the encrypted session key, decrypts the session key using the associated private key and then uses the session key to decrypt the data received (to be further decrypted using the derived key).

This mechanism is advantageous, since it represents a solution which is less complex from a computational point of view compared to asymmetric encryption of all the data exchanged between central server 700 and on-board device 100 and which allows the calculation time necessary for encryption and decryption of the exchanged data to be reduced significantly.

According to a number of variants, protection with the session key is used only on the connection between electronic device 210 and central server 700. The management of the session keys in this case is entrusted to the electronic device 210 and not to the on-board device 100.

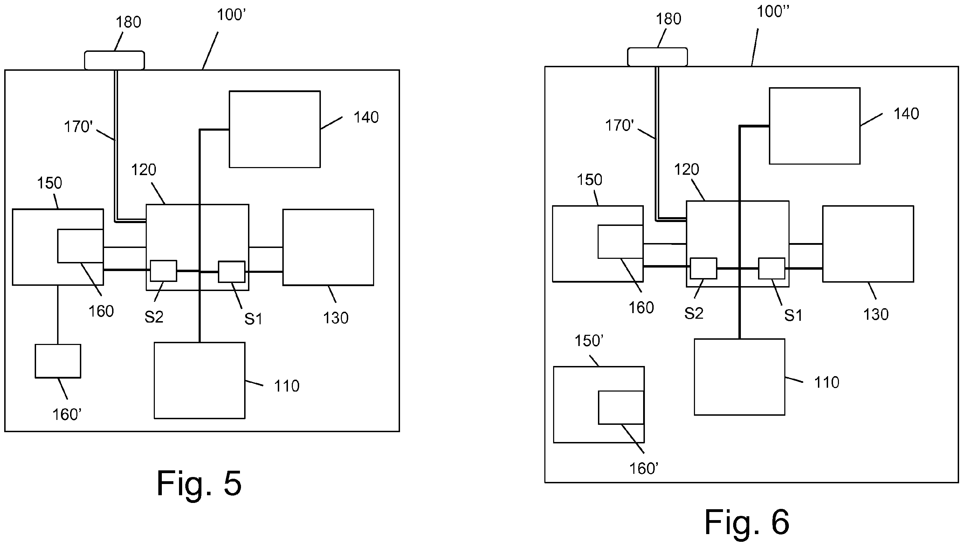

Figure 5 shows an on-board device according to a second embodiment of the present invention.

The on-board device 100' according to the second embodiment of the present invention preferably comprises all the components of the on-board device 100 shown in Figure 2d (but may correspond to any one of the other variants shown in Figures 2a-2c) and, in addition, also another non-volatile memory 160', called below also "non-volatile tag memory" or "tag memory".

The non-volatile tag memory 160' may be connected to the short-range communication stage 150, as shown schematically in Figure 5. Alternatively, the non-volatile tag memory 160' may be incorporated in the short-range communication stage 150. In both cases, the non-volatile tag memory 160' is accessible to the short-range communication stage 150, while it is not accessible to the data processing unit 120. The tag memory 160' is a non-volatile memory able to retain the data even when not electrically powered. For example, the non-volatile tag memory 160' may be a memory of the E²PROM type.

The tag memory 160' preferably permanently stores a set of basic data relating to the on-board device 100' and comprising the unique identification code OBU-ID of the on-board device 100' and, optionally, information about the user and/or the vehicle.

By means of the short-range radio connection between electronic device 210 and on-board device 100, according to the second embodiment, the short-range communication stage 150 may allow reading, via the electronic device 210, of the data stored in the tag memory 160', for example the aforementioned basic data of the device 100'.

In particular, upon reception of a read command from the electronic device 210, the short-range communication stage 150 advantageously retrieves the requested data from the tag memory 160' and sends it directly to the electronic device 210. This operation does not require any action either by the data processing unit 120 or by the battery 110. The basic data stored in the tag memory 160' can therefore be advantageously read by means of the electronic device 210, irrespective as to whether the on-board device 100 is functioning or not. The tag memory 160' therefore advantageously performs substantially an electronic tag function.

Moreover, by means of the short-range radio connection between electronic device 210 and on-board device 100, the short-range communication stage 150 may allow modification or rewriting of the data to be kept available in the tag memory 160', for example the aforementioned basic data of the device 100'.

In particular, upon reception of a write command from the electronic device 210 containing the modified data to be stored in the tag memory 160', the short-range communication stage 150 advantageously stores directly this data (optionally overwriting the old data) in the tag memory 160'. In this case too, the operation does not require any action either by the data processing unit 120 or by the battery 110.

According to this second embodiment, therefore, the short-range communication stage 150 allows not only the reading/writing of data in the non-volatile memory 130 via the volatile memory 160, but also reading/writing of data in the non-volatile memory 160' in electronic tag mode.

Figure 6 shows an on-board device according to a third embodiment of the present invention.

The on-board device 100" according to the third embodiment of the present invention preferably comprises all the components of the on-board device 100' shown in Figure 5 and, in addition, also a further short-range communication stage 150'.

The short-range communication stage 150' is similar to the short-range communication stage 150. Therefore, a detailed description thereof will not be repeated.

According to this third embodiment, the non-volatile tag memory 160' may be connected to the short-range communication stage 150. Alternatively, the non-volatile tag memory 160' may be incorporated in the short-range communication stage 150', as schematically shown in Figure 6. In any case the non-volatile tag memory 160' is accessible only to the short-range communication stage 150', while it is not accessible to any other component of the on-board device 100". The short-range communication stage 150' is neither logically nor electrically connected to any other component of the on-board device 100", except for the non-volatile tag memory 160'.

According to this second embodiment of the present invention, therefore, the short-range communication stage 150 allows the reading/writing of data in the non-volatile memory 130 via the volatile memory 160, while the short-range communication stage 150' allows the reading/writing of data in the non-volatile memory 160' in electronic tag mode.

According to the second and third embodiments, the tag memory 160' is preferably protected during access (i.e. both during reading and during writing) at least by means of an access mechanism based on a passcode.

According to the second and third embodiments, preferably a mechanism is also provided for ensuring the authenticity of the data read from the tag memory 160', i.e. guaranteeing for the electronic device 210 and/or the central server 700 that the read data really relates to the on-board device 100 and instead has not been cloned by another on-board device. Preferably, this mechanism is based on asymmetric encryption of the data made available during reading by means of permanent storage in the tag memory 160'. In particular, the data readable from the tag memory 160' is stored in the tag memory 160' encrypted with a private key.

Preferably, the central server 700 sends to the on-board device the data to be rendered readable from the tag memory 160' in a form already encrypted with private key. Upon reception of the data encrypted with private key from the central server 700, the short-range communication stage 150 may store it directly in the tag memory 160', without requesting any action on the part of the data processing unit 120. This second mechanism is the only one applicable according to the third embodiment, where the short-range communication stage 150' is not logically connected to the data processing unit 120. Alternatively, the data to be made readable from the tag memory 160' may be transmitted by the central server 700 unencrypted with a password which enables writing in the tag memory 160' and prevents overwriting or modification of this data by persons not in possession of the password.

If, subsequently, the electronic device 210 or the central server 700 requires reading of this data, said data is transmitted, encrypted with private key, to the electronic device 210 via the short-range communication stage 150 or 150'.

Then, according to an advantageous variant, the electronic device 210 uses the public key in order to decrypt the read data which is encrypted with private key. The public key, since it may be freely distributed, is preferably saved locally in the electronic device 210 (for example within an application executed by the device 210 for managing the reading of data from the device 100), such that the electronic device 210 is not dependent on the connection with the central server 700 during the whole of the operation of reading of the data stored in the tag memory 160'.

Optionally, it is possible to provide additional authentication of the data read, based on a hardware identifier UID₁₆₀ of the non-volatile memory 160' (for example, its silicon number). According to this variant, the hardware identifier UID₁₆₀ is preferably written by the manufacturer of the tag memory 160' in a specific area thereof, so that it is stored permanently and is available in read-only mode and therefore cannot be modified. Preferably, in the tag memory 160' the hardware identifier UID₁₆₀ is stored both unencrypted and encrypted with private key together with the data to be rendered readable (for example the basic data) permanently saved in the tag memory 160' (containing, as described above, the identifier OBU-ID and optionally data about the user and/or the vehicle).

The hardware identifier UID₁₆₀ is preferably transmitted to the electronic device 210 unencrypted, together with the data to be read encrypted with private key.

After carrying out decryption of the data to be read with public key, the electronic device 210 preferably compares the hardware identifier UID₁₆₀ received unencrypted with the hardware identifier UID₁₆₀ obtained from decryption with public key. If the two hardware identifiers coincide, the data to be read is further authenticated.

In this way, it is possible advantageously to prevent the tag memory 160' from being cloned and transferred onto another on-board device. If the contents of the non-volatile memory 160' were copied onto another on-board device, the lack of correspondence between the two hardware identifiers would be detected and the data read would thus not be authenticated. The non-clonability of the data stored in the tag memory 160', namely the impossibility of copying this data into the memory of another on-board device, is thus advantageously ensured.

As an alternative to asymmetric encryption, it is possible to envisage symmetric encryption of the data stored permanently by the non-volatile tag memory 160'. In this case, the private key (which is the same for encryption and decryption) is preferably known only to the central server 700 and the on-board device 100. Therefore, reading of this data in electronic tag mode by the electronic device 210 requires in any case forwarding of the data to the central server 700 which decrypts it with the private key known to it and, if authenticated, retransmits it unencrypted to the electronic device 210.

If the on-board device 100, 100', 100" is equipped with a data connection interface (for example if it is a satellite device also equipped with radio communication technology or Bluetooth), writing and reading of the data in the memory 130 may be managed by the data processing unit 120, interfaced in this case with the data connection interface (for example the radio communication technology internal modem or Bluetooth interface). In this case, the short-range communication stage 150 may be used solely for the function of reading data from the tag memory 160'.

The advantages of the on-board device 100 according to the embodiments of present invention are clear from the above description.

The on-board device described, in addition to allowing the reading of data (for example for verification or diagnostic purposes) and the writing of data (for example for configurational purposes) by the electronic device 210 allows in fact the exchange of data with the electronic device 210 and with the central server 700 to be managed in a particularly secure manner.

## Claims

1. On-board device (100, 100', 100") for a vehicle, said on-board device (100, 100', 100") being suitable for use in a system which provides a telematic traffic service, said on-board device (100, 100', 100") comprising:
- a radiofrequency communication stage (140) configured to communicate with a road-side device of said system;
- a short-range communication stage (150) configured to communicate with an electronic device (210) located in the vicinity thereof;
- a data processing unit (120) cooperating with said radiofrequency communication stage (140) and with said short-range communication stage (150),
- a non-volatile central operating memory (130) accessible by said data processing unit (120) and not accessible by said short-range communication stage (150); and
- a volatile memory (160) accessible by said short-range communication stage (150) and by said data processing unit (120),
wherein said volatile memory (160) is suitable for temporarily storing data to be read and/or data to be written in said non-volatile central operating memory (130) by said external device (210) via said short-range communication stage (150) and said data processing unit (120).

2. The on-board device (100, 100', 100") according to claim 1, also comprising a battery (110) electrically connected directly or indirectly to said radiofrequency communication stage (140), said short-range communication stage (150), said data processing unit (120), said non-volatile central operating memory (130) and said volatile memory (160).

3. The on-board device (100, 100', 100") according to claim 2, wherein said battery (110) is electrically connected to said non-volatile central operating memory (130) by means of a first switch (S1), said first switch (S1) being open when said data processing unit (120) is in standby mode and said first switch (S1) being closed when said data processing unit (120) is in operative mode.

4. The on-board device (100, 100', 100") according to claim 3, wherein said first switch (S1) is provided inside said data processing unit (120) and is configured to close automatically when said data processing unit (120) passes from said standby mode to said operative mode.

5. The on-board device (100, 100', 100") according to claim 3 or 4, wherein said battery (110) is directly electrically connected to said short-range communication stage (150).

6. The on-board device (100, 100', 100") according to claim 5, wherein said volatile memory (160) is a RAM memory or a buffer memory.

7. The on-board device (100, 100', 100") according to claim 3 or 4, wherein said battery (110) is electrically connected to said short-range communication stage (150) by means of a second switch (S2), said second switch (S2) being open when said data processing unit (120) is in standby mode and said second switch (S2) being closed when said data processing unit (120) is in operative mode.

8. The on-board device (100, 100', 100") according to claim 7, wherein said second switch (S2) is provided inside said data processing unit (120).

9. The on-board device (100, 100', 100") according to any one of claims 3 to 8, wherein said data processing unit (120) is electrically connected to said short-range communication stage (150) also by means of an electrical connection (170), and wherein:
- said short-range communication stage (150) is configured to generate and send to said data processing unit (120) via said electrical connection (170) a wake-up signal; and
- said data processing unit (120) is configured, upon reception of said wake-up signal, to pass from a stand-by mode to an operative mode, closing said first switch (S1).

10. The on-board device (100, 100', 100") according to any one of claims 3 to 9, also comprising a pushbutton (180) accessible on the outside of said on-board device (100) and electrically connected to said data processing unit (120) by means of a further electrical connection (170') and wherein:
- said pushbutton (180) is configured to, when pressed, generate and send to said data processing unit (120) via said further electrical connection (170) a further wake-up signal; and
- said data processing unit (120) is configured to, upon reception of said further wake-up signal, pass from a stand-by mode to an operative mode, closing said first switch (S1).

11. The on-board device (100, 100', 100") according to claims 9 and 10, wherein said processing unit (120) is configured to:
- upon reception of said wake-up signal from said short-range communication stage (150), enable only operations for reading of data from said non-volatile central operating memory (130); and
- upon reception of said further wake-up signal from said pushbutton (180), enable only operations of writing data into said non-volatile central operating memory (130).

12. The on-board device (100, 100', 100") according to any one of the preceding claims, wherein said volatile memory (160) comprises:
- at least one first memory area in which said short-range communication stage (150) is enabled to write only said data to be written in said non-volatile central operating memory (130) and from which said data processing unit (120) is enabled only to read said data to be written in said non-volatile central operating memory (130); and/or
- at least one second memory area in which said data processing unit (120) is enabled only to write said data to be read from said non-volatile central operating memory (130) and from which said short-range communication stage (150) is enabled only to read said data to be read from said non-volatile central operating memory (130).

13. The on-board device (100') according to any one of the preceding claims, also comprising a further non-volatile memory (160') configured to store a set of second data relating to said on-board device (100'), said further non-volatile memory (160') being accessible by said short-range communication stage (150), said short-range communication stage (150) being configured to read said second data from said further non-volatile memory (160') and send it to said electronic device (210).

14. The on-board device (100") according to any one of claims 1 to 12, also comprising a further short-range communication stage (150') and a further non-volatile memory (160') able to store a set of second data relating to said on-board device (100'), said further non-volatile memory (160') being accessible by said short-range communication stage (150'), said short-range communication stage (150') being also configured to read said second data from said further non-volatile memory (160') and send it to said electronic device (210).

15. A system for providing a telematic traffic service, said system comprising a plurality of road-side devices, an electronic device (210) and an on-board device (100) for a vehicle, said on-board device (100) being configured to communicate both with said plurality of road-side devices and with said electronic device (210), said on-board device (100) being according to any one of claims 1 to 14.

## Patentansprüche

1. Bordgerät (100, 100', 100") für ein Fahrzeug, wobei das Bordgerät (100, 100', 100") geeignet ist zur Verwendung in einem System, welches einen telematischen Verkehrsdienst bereitstellt, wobei das Bordgerät (100, 100', 100") aufweist:
eine Funkfrequenz-Kommunikationsstufe (140), welche konfiguriert ist, um mit einer straßenseitigen Einrichtung des Systems zu kommunizieren;
- eine Nahbereichs-Kommunikationsstufe (150), welche konfiguriert ist, mit einer elektronischen Einrichtung (210) zu kommunizieren, die sich in der Nähe hiervon befindet;
- eine Datenverarbeitungseinheit (120), die mit der Funkfrequenz-Kommunikationsstufe (140) und der Nahbereichs-Kommunikationsstufe (150) zusam menarbeitet,
- einen nicht flüchtigen zentraler Betriebsspeicher (130), welcher für die Datenverarbeitungseinheit (120) zugänglich und für die Nahbereichs-Kommunikationsstufe (150) nicht zugänglich ist; und
- einen flüchtigen Speicher (160), welcher für die Nahbereichs-Kommunikationsstufe (150) und für die Datenverarbeitungseinheit (120) zugänglich ist,
- wobei der flüchtige Speicher (160) geeignet ist, zum zeitweisen Speichern von Daten, die gelesen werden sollen von und/oder Daten, die geschrieben werden sollen in dem/den nicht flüchtigen zentralen Betriebsspeicher (130) durch die externe Einrichtung (210) über die Nahbereichs-Kommunikationsstufe (150) und die Datenverarbeitungseinheit (120).

2. Bordgerät (100, 100', 100") nach Anspruch 1, des Weiteren aufweisend:
eine Batterie (110), die direkt oder indirekt mit der Funkfrequenz-Kommunikationsstufe (140) der Nahbereichs-Kommunikationsstufe (150), der Datenverarbeitungseinheit (120), dem nicht flüchtigen zentralen Betriebsspeicher (130) und dem flüchtigen Speicher (160) elektrisch verbunden ist.

3. Bordgerät (100, 100', 100") nach Anspruch 2, wobei die Batterie (110) mit dem nicht flüchtigen zentralen Betriebsspeicher (130) über Mittel eines ersten Schalters (S1) elektrisch verbunden ist, wobei der erste Schalter (S1) offen ist, wenn die Datenverarbeitungseinheit (120) im Stand-by-Modus ist und der erste Schalter (S1) geschlossen ist, wenn die Datenverarbeitungseinheit (120) im Betriebsmodus ist.

4. Bordgerät (100, 100', 100") nach Anspruch 3,
wobei der erste Schalter (S1) innerhalb der Datenverarbeitungseinheit (120) vorgesehen ist und konfiguriert ist, sich automatisch zu schließen, wenn die Datenverarbeitungseinheit (120) vom Stand-by-Modus in den Betriebsmodus wechselt.

5. Bordgerät (100, 100', 100") nach Anspruch 3 oder 4,
wobei die Batterie (110) direkt mit der Nachbereichskommunikationsstufe (150) elektrisch verbunden ist.

6. Bordgerät (100, 100', 100") nach Anspruch 5,
wobei der flüchtige Speicher (160) ein RAM-Speicher oder ein Kofferspeicher ist.

7. Bordgerät (100, 100', 100") nach Anspruch 3 oder 4,
wobei die Batterie (110) mit der Nachbereichskommunikationsstufe (150) über Mittel eines zweiten Schalters (S2) elektrisch verbunden ist, wobei der zweite Schalter (S2) offen ist, wenn die Datenverarbeitungseinheit (120) im Stand-by-Modus ist und der zweite Schalter (S2) geschlossen ist, wenn die Datenverarbeitungseinheit (120) im Betriebsmodus ist.

8. Bordgerät (100, 100', 100") nach Anspruch 7,
wobei der zweite Schalter (S2) innerhalb der Datenverarbeitungseinheit (120) vorgesehen ist.

9. Bordgerät (100, 100', 100") nach einem der Ansprüche 3 bis 8,
wobei die Datenverarbeitungseinheit (120) mit der Nahbereichs-Kommunikationsstufe (150) auch durch Mittel einer elektrischen Verbindung (170) elektrisch verbunden ist und wobei:
- die Nachbereichs-Kommunikationsstufe (150) konfiguriert ist, um ein Aufwachsignal zu erzeugen und an die Datenverarbeitungseinheit (120) über die elektrische Verbindung (170) zu senden; und
- die Datenverarbeitungseinheit (120) konfiguriert ist, um beim Empfang des Aufwachsignals vom Stand-by-Modus in einen Betriebsmodus überzugehen, wobei der Schalter (S1) geschlossen wird.

10. Bordgerät (100, 100', 100") nach einem der Ansprüche 3 bis 9, ferner aufweisend: einen Druckknopf (180), der an der Außenseite des Bordgerätes (100) zugänglich ist und elektrisch mit der Datenverarbeitungseinheit (120) durch Mittel einer weiteren elektrischen Verbindung (170') verbunden ist und wobei:
- der Druckknopf (180) konfiguriert ist, um, wenn er gedrückt wird, ein weiteres Aufwachsignal zu erzeugen und an die Datenverarbeitungseinheit (120) über die weitere elektrische Verbindung (170) zu senden; und
- die Datenverarbeitungseinheit (120) konfiguriert ist, um beim Empfang des weiteren Aufwachsignals von einem Stand-by-Modus in einen Betriebsmodus überzugehen, wobei der Schalter (S1) geschlossen wird.

11. Bordgerät (100, 100', 100") nach Anspruch 9 und 10,
wobei die Verarbeitungseinheit (120) konfiguriert ist:
- beim Empfang des Aufwachsignals von der Nahbereichs-Kommunikationsstufe (150) nur Operationen zum Lesen von Daten aus dem nicht flüchtigen Betriebsspeicher (130) zu ermöglichen; und
- beim Empfang des weiteren Aufwachsignals von dem Druckknopf (180) nur Operationen zum Schreiben von Daten in den nicht flüchtigen zentralen Betriebsspeicher (130) zu ermöglichen.

12. Bordgerät (100, 100', 100") nach einem der vorangehenden Ansprüche,
wobei der flüchtige Speicher (160) aufweist:
- mindestens einen ersten Speicherbereich in welchen die Nahbereichs-Kommunikationsstufe (150) nur die in den nicht flüchtigen zentralen Betriebsspeicher (130) zu schreibenden Daten schreiben kann und von welchen die Datenverarbeitungseinheit (120) nur die in den nicht flüchtigen zentralen Betriebsspeicher (130) zu schreibenden Daten lesen kann; und/oder
- mindestens einen zweiten Speicherbereich in welchen Datenverarbeitungseinheit (120) nur die Daten, die von dem nicht flüchtigen zentralen Betriebsspeicher (130) gelesen werden sollen, schreiben kann und von dem die Nahbereichs-Kommunikationsstufe (150) nur die Daten lesen kann, welche von dem nicht flüchtigen zentralen Betriebsspeicher (130) gelesen werden sollen.

13. Bordgerät (100') nach einem der vorangehenden Ansprüche des Weiteren aufweisend:
einen weiteren nicht flüchtigen Speicher (160'), der konfiguriert ist, einen Satz von zweiten Daten, die sich auf das Bordgerät (100') beziehen zu speichern, wobei auf den weiteren nicht flüchtigen Speicher (160') durch die Nahbereichs-Kommunikationsstufe (150) zugegriffen werden kann, wobei die Nachbereichs-Kommunikationsstufe (150) konfiguriert ist, um die zweiten Daten von dem weiteren nicht flüchtigen Speicher (160') zu lesen und sie zu der elektronischen Einrichtung (210) zu senden.

14. Bordgerät (100") nach einem der Ansprüche 1 bis 12, ferner aufweisend:
eine weitere Nahbereichs-Kommunikationsstufe (150') und einen weiteren nicht flüchtigen Speicher (160'), der geeignet ist, einen Satz von zweiten Daten, welche sich auf das Bordgerät (100') beziehen, zu speichern, wobei auf den weiteren nicht flüchtigen Speicher (160') durch die Nahbereichs-Kommunikationsstufe (150') zugegriffen werden kann, wobei die Nahbereichs-Kommunikationsstufe (150') ferner konfiguriert ist, um die zweiten Daten aus dem weiteren nicht flüchtigen Speicher (160') auszulesen und sie an die elektronische Einrichtung (210) zu senden.

15. System zum Bereitstellen von telematischen Verkehrsdaten, wobei das System eine Vielzahl von straßenseitigen Einrichtungen, eine elektronische Einrichtung (210) und ein Bordgerät (100) für ein Fahrzeug aufweist, wobei das Bordgerät (100) konfiguriert ist, mit beiden, der Vielzahl von straßenseitigen Einrichtungen und mit der elektronischen Einrichtung (210) zu kommunizieren, wobei das Bordgerät (100) nach einem der Ansprüche 1 bis 14 ist.

## Revendications

1. Dispositif embarqué (100, 100', 100") pour un véhicule, ledit dispositif embarqué (100, 100', 100") étant pertinent pour être utilisé dans un système qui fournit un service de circulation télématique, ledit dispositif embarqué (100, 100', 100") comprenant :
- un étage de communication radiofréquence (140) configuré de manière à communiquer avec un dispositif de bord de route dudit système ;
- un étage de communication à courte portée (150) configuré de manière à communiquer avec un dispositif électronique (210) situé à proximité de celui-ci ;
- une unité de traitement de données (120) coopérant avec ledit étage de communication radiofréquence (140) et avec ledit étage de communication à courte portée (150) ;
- une mémoire d'exploitation centrale non volatile (130) accessible par ladite unité de traitement de données (120) et non accessible par ledit étage de communication à courte portée (150) ; et
- une mémoire volatile (160) accessible par ledit étage de communication à courte portée (150) et par ladite unité de traitement de données (120) ;
dans lequel ladite mémoire volatile (160) est pertinente pour stocker temporairement des données devant être lues et/ou des données devant être écrites, dans ladite mémoire d'exploitation centrale non volatile (130), par ledit dispositif externe (210), par l'intermédiaire dudit étage de communication à courte portée (150) et de ladite unité de traitement de données (120).

2. Dispositif embarqué (100, 100', 100") selon la revendication 1, comprenant également une batterie (110) connectée électriquement, directement ou indirectement, audit étage de communication radiofréquence (140), audit étage de communication à courte portée (150), à ladite unité de traitement de données (120), à ladite mémoire d'exploitation centrale non volatile (130) et à ladite mémoire volatile (160).

3. Dispositif embarqué (100, 100', 100") selon la revendication 2, dans lequel ladite batterie (110) est électriquement connectée à ladite mémoire d'exploitation centrale non volatile (130) au moyen d'un premier commutateur (S1), ledit premier commutateur (S1) étant ouvert lorsque ladite unité de traitement de données (120) est en mode veille et ledit premier commutateur (S1) étant fermé lorsque ladite unité de traitement de données (120) est en mode opérationnel.

4. Dispositif embarqué (100, 100', 100") selon la revendication 3, dans lequel ledit premier commutateur (S1) est fourni à l'intérieur de ladite unité de traitement de données (120) et est configuré de manière à se fermer automatiquement lorsque ladite unité de traitement de données (120) passe dudit mode veille audit mode opérationnel.

5. Dispositif embarqué (100, 100', 100") selon la revendication 3 ou 4, dans lequel ladite batterie (110) est directement connectée électriquement audit étage de communication à courte portée (150).

6. Dispositif embarqué (100, 100', 100") selon la revendication 5, dans lequel ladite mémoire volatile (160) est une mémoire RAM ou une mémoire tampon.

7. Dispositif embarqué (100, 100', 100") selon la revendication 3 ou 4, dans lequel ladite batterie (110) est électriquement connectée audit étage de communication à courte portée (150) au moyen d'un second commutateur (S2), ledit second commutateur (S2) étant ouvert lorsque ladite unité de traitement de données (120) est en mode veille et ledit second commutateur (S2) étant fermé lorsque ladite unité de traitement de données (120) est en mode opérationnel.

8. Dispositif embarqué (100, 100', 100") selon la revendication 7, dans lequel ledit second commutateur (S2) est fourni à l'intérieur de ladite unité de traitement de données (120).

9. Dispositif embarqué (100, 100', 100") selon l'une quelconque des revendications 3 à 8, dans lequel ladite unité de traitement de données (120) est électriquement connectée audit étage de communication à courte portée (150) également au moyen d'une connexion électrique (170), et dans lequel :
- ledit étage de communication à courte portée (150) est configuré de manière à générer et envoyer, à ladite unité de traitement de données (120), par l'intermédiaire de ladite connexion électrique (170), un signal de réveil ; et
- ladite unité de traitement de données (120) est configurée, suite à la réception dudit signal de réveil, de manière à passer d'un mode veille à un mode opérationnel, en fermant ledit premier commutateur (S1).

10. Dispositif embarqué (100, 100', 100") selon l'une quelconque des revendications 3 à 9, comprenant également un bouton-poussoir (180) accessible à l'extérieur dudit dispositif embarqué (100), et connecté électriquement à ladite unité de traitement de données (120) au moyen d'une connexion électrique supplémentaire (170') et dans lequel :
- ledit bouton-poussoir (180) est configuré de manière à, lorsqu'il est enfoncé, générer et envoyer, à ladite unité de traitement de données (120), par l'intermédiaire de ladite connexion électrique supplémentaire (170'), un signal de réveil supplémentaire ; et
- ladite unité de traitement de données (120) est configurée de manière à, suite à la réception dudit signal de réveil supplémentaire, passer d'un mode veille à un mode opérationnel, en fermant ledit premier commutateur (S1).

11. Dispositif embarqué (100, 100', 100") selon les revendications 9 et 10, dans lequel ladite unité de traitement de données (120) est configurée de manière à :
- suite à la réception dudit signal de réveil en provenance dudit étage de communication à courte portée (150), permettre uniquement des opérations de lecture de données à partir de ladite mémoire d'exploitation centrale non volatile (130) ; et
- suite à la réception dudit signal de réveil supplémentaire en provenance dudit bouton-poussoir (180), permettre uniquement des opérations d'écriture de données dans ladite mémoire d'exploitation centrale non volatile (130).

12. Dispositif embarqué (100, 100', 100") selon l'une quelconque des revendications précédentes, dans lequel ladite mémoire volatile (160) comprend :
- au moins une première zone de mémoire dans laquelle ledit étage de communication à courte portée (150) est autorisé à écrire uniquement lesdites données devant être écrites dans ladite mémoire d'exploitation centrale non volatile (130), et à partir de laquelle ladite unité de traitement de données (120) est autorisée à lire uniquement lesdites données devant être écrites dans ladite mémoire d'exploitation centrale non volatile (130) ; et/ou
- au moins une seconde zone de mémoire dans laquelle ladite unité de traitement de données (120) est autorisée à écrire uniquement lesdites données devant être lues à partir de ladite mémoire d'exploitation centrale non volatile (130), et à partir de laquelle ledit étage de communication à courte portée (150) est autorisé à lire uniquement lesdites données devant être lues à partir de ladite mémoire d'exploitation centrale non volatile (130).

13. Dispositif embarqué (100') selon l'une quelconque des revendications précédentes, comprenant également une mémoire non volatile supplémentaire (160') configurée de manière à stocker un ensemble de secondes données relatives audit dispositif embarqué (100'), ladite mémoire non volatile supplémentaire (160') étant accessible par ledit étage de communication à courte portée (150), ledit étage de communication à courte portée (150) étant configuré de manière à lire lesdites secondes données à partir de ladite mémoire non volatile supplémentaire (160'), et à les envoyer audit dispositif électronique (210).

14. Dispositif embarqué (100") selon l'une quelconque des revendications 1 à 12, comprenant également un étage de communication à courte portée supplémentaire (150') et une mémoire non volatile supplémentaire (160') apte à stocker un ensemble de secondes données relatives audit dispositif embarqué (100'), ladite mémoire non volatile supplémentaire (160') étant accessible par ledit étage de communication à courte portée supplémentaire (150'), ledit étage de communication à courte portée supplémentaire (150') étant également configuré de manière à lire lesdites secondes données à partir de ladite mémoire non volatile supplémentaire (160'), et à les envoyer audit dispositif électronique (210).

15. Système destiné à fournir un service de circulation télématique, ledit système comprenant une pluralité de dispositifs de bord de route, un dispositif électronique (210) et un dispositif embarqué (100) pour un véhicule, ledit dispositif embarqué (100) étant configuré de manière à communiquer à la fois avec ladite pluralité de dispositifs de bord de route et avec ledit dispositif électronique (210), ledit dispositif embarqué (100) étant selon l'une quelconque des revendications 1 à 14.
